Europäisches Patentamt

European Patent Office

Office européen des brevets

(19)

(11) Publication number: **0 337 276 B1**

(12) **EUROPEAN PATENT SPECIFICATION**

(45) Date of publication of patent specification :
16.10.91 Bulletin 91/42

(51) Int. Cl.⁵: **B64G 1/00, A47C 9/00**

(21) Application number: **89105974.3**

(22) Date of filing : **05.04.89**

(54) Stool for space use.

(30) Priority : 15.04.88 JP 91615/88

(43) Date of publication of application :
18.10.89 Bulletin 89/42

(45) Publication of the grant of the patent :
16.10.91 Bulletin 91/42

(84) Designated Contracting States :
DE FR

(56) References cited :
US-A- 3 363 920
US-A- 4 676 547

(73) Proprietor : MITSUBISHI JUKOGYO
KABUSHIKI KAISHA
5-1, Marunouchi 2-chome Chiyoda-ku
Tokyo 100 (JP)

(72) Inventor : Otsuji, Kaoru Nagoya Aircraft Works
of Mitsubishi
Jukogyo Kabushiki Kaisha 10.Oe-cho,
Minato-ku
Nagoya-shi Aichi-ken (JP)

(74) Representative : Henkel, Feiler, Hänzel &
Partner             .
Möhlstrasse 37
W-8000 München 80 (DE)

# Description

## BACKGROUND OF THE INVENTION

Field of the Invention :

The present invention relates to a stool that is available for holding a human body at a fixed attitude for the purpose that a person performs a work under a weightless condition in space or a similar condition.

Description of the Prior Art :

Heretofore, during a work within a flying body under a weightless condition, a worker fixed only the portions of his feet by meshing metal pieces mounted to his shoes with metal members on the side of the structure of the flying body, by employing hook-and-loop-fasteners for sticking the bottoms of his shoes to the floor, or by engaging his feet with cords mounted to the floor.

The above-mentioned work under a weightless condition in the prior art involved the following problems to be resolved :

(1) Fixing of only the portions of the worker's feet would result in a large burden upon his ankles in the case of changing the orientation of his body.

(2) Furthermore, in order to achieve fixing firmly, it was necessary to prepare metal pieces for exclusive use on the side of the shoes.

(3) Upon emergency, an operation of releasing the fixing between the shoes and the floor was necessary.

According to the present invention, as measures for resolving the above-described problems, there is provided a stool for space use comprising a head of vertical rod shape which can be pinched by user's both thighs, a horizontal shoulder transversely connected to the lower end of the head, on which shoulder a user can sit just like riding on a person's shoulder while pinching the head between his both thighs, a leg of vertical rod shape nearly perpendicularly connected to the bottom of the central portion of that shoulder, a foot of horizontal rod shape nearly perpendicularly connected to the lower end of the leg at such position that the feet of the user sitting on the shoulder may twine round the foot, and an arm projected from the above-mentioned structure and capable of being fixed to another structure at the other end thereof

Owing to the above-described structural feature, the present invention has the following effects and advantages. That is, since an upper body of a user (worker) is urged against the head and his both thighs ride on the shoulder by twining his feet round the foot, his lower half body can be fixed almost without burdening his feet. Shoes are not neccessitated to have special provision, and by releasing twined feet, fixing of a body can be released naturally upon emergency.

The above-mentioned and other objects, features and advantages of the present invention will become more apparent by reference to the following description of preferred embodiments of the invention taken in conjunction with the accompanying drawings.

## BRIEF DESCRIPTION OF THE DRAWINGS

In the accompanying drawings :
Fig. 1 is a schematic front view of a fixed preferred embodiment of the present invention ;
Fig. 2 is a schematic perspective view of a second preferred embodiment of the invention ;
Fig. 3 is a schematic perspective view of a third preferred embodiment of the invention ; in which the stool is held in a cantilever fashion ; and
Fig : 4 is a schematic perspective view of a fourth preferred embodiment of the present invention.

## DESCRIPTION OF THE PREFERRED EMBODIMENTS

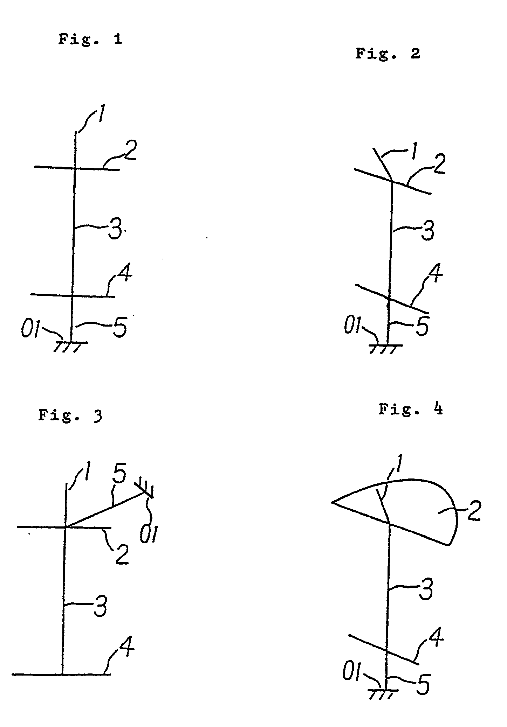

At first, a first preferred embodiment of the present invention will be described with reference to Fig. 1. In this figure, reference numeral 1 designates a head of vertical rod shape which can be pinched by user's (worker's) both thighs, numeral 2 designates a shoulder of horizontal rod shape transversely connected to the lower end of the head 1, on which shoulder a user can sit just like riding on a person's shoulder while pinching the aforementioned head 1 between his both thighs, numeral 3 designates a leg of vertical rod shape nearly perpendicularly connected to the bottom of the central portion of the shoulder 2, numeral 4 designates a foot of horizontal rod shape nearly perpendicularly connected to the lower end of the leg 3 at such position that the feet of the user sitting on the above-mentioned shoulder 2 may twine round the foot, and numeral 5 designates an arm projected nearly vertically from any arbitrary location in the above-described structure, by way of example, from the bottom of the central portion of the foot 4 and fixed to another structure 01. When the above-described stool is to be used, a user pinches the head 1 between his both thighs, sits on the shoulder 2 at the state of riding on a person's shoulder (or makes the proximities of the joints of thighs rest on the shoulder 2), twines the both feet round the foot 4 to stabilize his body, and then performs his work.

It is to be noted that while wordings relating to upper, lower, left and right directions such as "of vertical rod shape", "of horizontal rod shape", "the bottom", etc. were used in the above description, this was done for the purpose of facilitating recognization when the subject stool is constructed on the ground. In the weightless space of the universe, the absolute reference for the upper, lower, left and right directions disappears, and solely they are recognized on the basis of senses of a human being. Therefore, even if the above-mentioned structure 01 is present on the ceiling and a user stands on his head and hands as viewed from the ground, the structure of the stool for space use according to the present invention is to be defined in terms of the attitude of the stool in the case where it is constructed on the ground.

Fig. 2 shows a second preferred embodiment of the present invention, in which the head 1 is inclined with respect to an extension of the leg 3, and so, this embodiment is suitable for the case where a continuous work is performed for a long period at a forwardly bent attitude.

Fig. 3 shows a third preferred embodiment of the present invention, in which the arm 5 projects from the intersecting point between the head 1 and the shoulder 2, and in the case where the structure is seen on the ground, the arm 5 is overhanging in a cantilever fashion from the structure 01 which corresponds to a wall within a space satellite.

Fig. 4 shows a fourth preferred embodiment of the present invention, in which the width of the shoulder is broadened into a semicircular disc shape, and as a load applied to the hips of the user is not concentrated, the stool can be used without accompanying pains even at a place under artificial gravity or the like.

For instance, as a matter of course, it is also possible to provide the arm 5 directly on the shoulder 2 or on the foot 4. It is arbitrary whether the arm 5 is permanently fixed to the structure 01 or detachably fixed thereto.

Since the stool for space use according to the present invention is constructed in the above-described manner, a human body can be fixedly supported by the integral assembly of three parts consisting of a shoulder, a head and a foot, hence the attitude of the human body is extremely stabilized, and even a delicate work can be continued stably for a long time.

In addition, even in the case of changing the orientation of a human body, in distinction from the case where only the feet was fixed in the prior art, it would never occur that an ankle is sprained or an excessively large burden is placed on the feet.

Moreover, there is no need to provide a special device for fixing on the side of the shoes. Furthermore, in the case where an emergency evacuation is neccessitated during a work, in contrast to the fact that in the prior art for the purpose of disconnecting the shoes from the structure a special operation was necessitated, according to the present invention, in any case of the above-described embodiments it only suffice to simply release the feet twined round the foot 4, and so, the stool for space use according to the present invention is convenient and efficient.

Owing to the above-described construction, the present invention has the following advantages :

(1)    Since the entire lower half body is fixed, a burden placed on the ankle is lightened.

(2)    Special provision is unnecessary on the side of the shoes.

(3)    Upon emergency, fixing can be released naturally.

While a principle of the present invention has been described above in connection to preferred embodiments of the invention, it is intended that all matter described above and illustrated in the drawings shall be interpreted to be illustrative and not in a limiting sense.

## Claims

1. A stool for space use comprising a head (1) of vertical rod shape which can be pinched by user's both thighs, a horizontal shoulder (2) transversaly connected to the lower end of said head (1), on which shoulder (2) a user can sit just like riding on a person's shoulder while pinching said head (1) between his both thighs, a leg (3) of vertical rod shape substantially perpendicularly connected to the bottom of the central portion of said shoulder (2), a foot (4) of horizontal rod shape substantially perpendicularly connected to the lower end of said leg (3) at such position that the feet of the user sitting on said shoulder (2) may twine round said foot (4), and and arm (5) projected from the above-mentioned structure and capable of being fixed to another structure at the other end thereof.

2. A stool for space use as claimed in Claim 1, wherein said head (1) is inclined with respect to said leg (3).

3. A stool for space use as claimed in Claim 1, wherein said shoulder (2) is formed in a semicircular disc shape.

## Patentansprüche

1. Sitz zum Gebrauch im Weltraum, umfassend einen Kopfteil (1) einer lotrechten Stangenform, der mit den beiden Oberschenkeln des Anwenders einklemmbar ist, einen quer mit dem unteren Ende des Kopfteils (1) verbundenen waagerechten Schulterteil (2), auf dem ein Anwender wie auf der Schulter einer Person sitzen kann, während der Anwender den Kopfteil (1) zwischen seinen beiden Oberschenkeln einklemmt, einen eine lotrechte Stangenform aufweisenden Bein- oder Stegteil (3), der im wesentlichen senkrecht mit der Unterseite des mittleren Abschnitts des Schulterteils (2) verbunden ist, einen eine waagerechte Stangenform aufweisenden Fußteil (4), der im wesentlichen senkrecht (dazu) mit dem unteren Ende des Stegteils (3) in einer solchen Stellung verbunden ist, daß die Füße des auf dem Schulterteil (2) sitzenden Anwenders den Fußteil (4) umschlingen können, und einen vom vorstehend umrissenen Gebilde abgehenden und an seinem anderen Ende an einem anderen Gebilde befestigbaren Armteil (5).

2. Sitz für Gebrauch im Weltraum nach Anspruch 1, dadurch gekennzeichnet, daß der Kopfteil (1) gegenüber dem Stegteil (3) geneigt ist.

3. Sitz für Gebrauch im Weltraum nach Anspruch 1, dadurch gekennzeichnet, daß der Schulterteil (2) als halbkreisförmige Scheibe geformt ist.

## Revendications

1. Une sellete pour usage spatial, comportant une tête (1) en forme de tige verticale qui peut être pincée par les deux cuisses de l'utilisateur, un épaulement horizontal (2) relié transversalement à l'extrémité inférieure de ladite tête (1), sur lequel épaulement (2) un utilisateur peut s'asseoir exactement à la manière dont il s'assiérait sur les épaules d'une personne tout en serrant ladite tête (1) entre ses deux cuisses, une branche (3) en forme de tige verticale reliée sensiblement verticalement à la partie inférieure de la partie centrale dudit épaulement (2), un pied (4) en forme de tige horizontale relié sensiblement perpendiculairement à l'extrémité inférieure de ladite branche (3) en un emplacement tel que les pieds de l'utilisateur assis sur ledit épaulement (2) peuvent s'enrouler autour dudit pied (4), et un bras (5) faisant saillie de la structure ci-dessus mentionnée et capable d'être fixé à une autre structure à son autre extrémité.

2. Une sellette pour usage spatial telle que revendiquée dans la revendication 1, dans laquelle ladite tête (1) est inclinée par rapport à ladite branche (3).

3. Une sellette pour usage spatial telle que revendiquée dans la revendication 1, dans laquelle ledit épaulement (2) se présente sous la forme d'un disque semi-circulaire.

Fig. 1

Fig. 2

Fig. 3

Fig. 4

5